(19) Europäisches Patentamt
European Patent Office
Office européen des brevets

(11) Publication number: 0 369 613 A1

# (12) EUROPEAN PATENT APPLICATION

(21) Application number: 89310770.6

(51) Int. Cl.[5]: A01N 47/18, A01N 25/02

(22) Date of filing: 19.10.89

(30) Priority: 18.11.88 GB 8827030

(43) Date of publication of application: 23.05.90 Bulletin 90/21

(84) Designated Contracting States: AT BE CH DE ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Brown, David Joseph
56 Ralphs Ride
Bracknell Berkshire(GB)
Inventor: Marrs, Gordon James
South Riding Belmont Park Road
Maidenhead Berkshire(GB)

(74) Representative: Bishop, Nigel Douglas et al
Imperial Chemical Industries PLC Legal Department: Patents PO Box 6 Bessemer Road
Welwyn Garden City Herts, AL7 1HD(GB)

## (54) Insecticidal compositions.

(57) The invention provides an aphicidal composition suitable for use as a concentrate for the preparation of a foliar spray, characterised in that the composition is a slow-release emulsifiable concentrate comprising, as active ingredient, an aphicide selected from the group of aphicides consisting of pirimicarb, dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, a carrier solvent and a polymeric substance which is more soluble in the carrier solvent than in water. The invention also provides processes for the preparation of the compositions and a method for their use in preventing or combating aphid infestations of plants.

EP 0 369 613 A1

## INSECTICIDAL COMPOSITIONS

This application relates to insecticidal compositions containing pirimicarb, suitable for use as concentrates for the preparation of aqueous sprays for foliar application, leading to improved persistence of pirimicarb on target crops.

UK Patent specification No 1,181,657 describes pyrimidine derivatives having selective aphicidal activity. One particular compound according to the disclosure of UK 1,181,657 has the chemical structure:

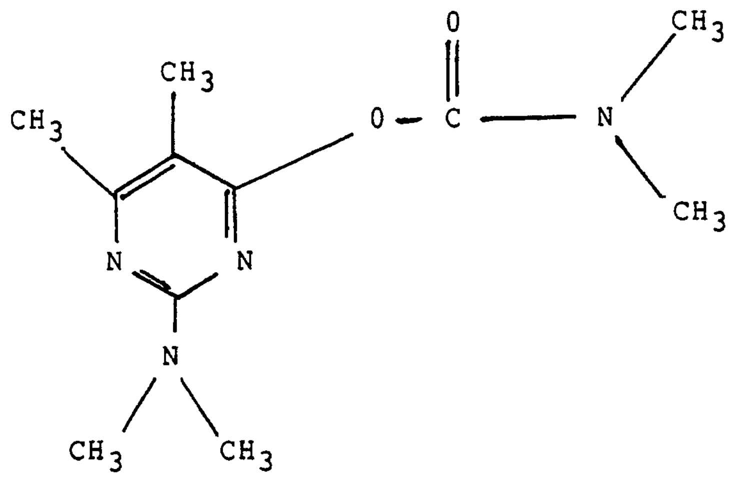

and is known by the common name pirimicarb. Pirimicarb is a fast acting, carbamate aphicide which exhibits a rapid initial knockdown effect by fumigant action, and is widely used for the effective control of aphids in cereal and vegetable crops, sugar beet and top fruit. Pirimicarb provides rapid control of aphid pests, resulting in a quick clean-up of infestations and preventing the transmission of aphid-borne viral diseases of the target crop. Pirimicarb is traditionally supplied in the form of a concentrate suitable for dilution in water and application as a foliar spray. Any of the formulations under the heading "Concentrates for Dilution in Water" in the GIFAP Catalogue of Pesticide Formulation Types and International Coding System are suitable for foliar application of pirimicarb in this way. Examples of compositions which have proved effective include solid compositions such as wettable powders (WP) and water dispersible grains (WG), and liquid compositions such as emulsifiable concentrates (EC), suspension concentrates (SC) and capsule suspensions (CS). Although the rapid control of aphid pests provided by these traditional compositions is satisfactory in most circumstances, the low persistence of the compound at the target crop resulting from traditional formulation types can lead to the possibility of re-infestation, resulting in the need for further applications to provide continued control.

We have now developed liquid compositions of pirimicarb, suitable for use as concentrates for the preparation of aqueous foliar sprays, containing additives which lead to greater persistence of the compound on the target crop, thereby preventing re-infestation of aphid pests, but which, surprisingly, retain the rapid initial knockdown and control observed with traditional compositions.

Accordingly, there is provided an aphicidal composition suitable for use as a concentrate for the preparation of a foliar spray, characterised in that the composition is a slow-release emulsifiable concentrate comprising pirimicarb as active ingredient, a carrier solvent and a polymeric substance which is more soluble in the carrier solvent than in water.

The slow-release compositions according to the present invention are toxic to and may be used in the control of aphid pests associated with agriculture or horticulture. They are of particular use for the control of aphid pests of cotton, cereal crops, vegetable crops, sugar beet and top fruit, for example Aphis gossypii, Sitobion avenae, Myzus persicae, Aphis fabae and Eriosoma lanigerum. They are also of particular use in preventing aphid-borne virus transmission, for example yellowing viruses of sugar beet, barley yellow dwarf virus of cereals and potato leaf roll virus of potatoes. In use, the compositions are diluted with water to form aqueous preparations which remain homogeneous for a sufficient time to enable them to be applied by conventional spray equipment to the pests, to the locus of the pest, to the habitat of the pests or to growing plants infested with or liable to infestation by the pests or to the medium in which the plants are growing. The compositions may contain from 5% to 85% by weight of pirimicarb, preferably from 10% to 20%, and

when diluted to form aqueous preparations, such preparations may contain varying amounts of the active ingredient depending on the purpose for which they are to be used. For agricultural and horticultural purposes, an aqueous preparation containing between 0.0001% and 0.1% of pirimicarb is particularly useful.

The compositions according to the invention are also suitable for admixture or tank mixture with one or more compositions containing additional active ingredients at the time of preparing an aqueous spray for foliar application. Suitable active ingredients for such admixture include alternative insecticides, insecticide synergists, herbicides, fungicides and plant growth regulators.

Compositions according to the invention are emulsifiable concentrates comprising one or more carrier solvent and incorporating a polymeric substance which is more soluble in the carrier solvent than in water. The polymeric substance may be a natural or a synthetic polymer. Suitable solvent-soluble synthetic polymers include polystyrene, PVC, polyacrylates, polyvinylacetate and copolymers of these materials. An example of a suitable solvent-soluble natural polymer is Shellac. Suitable carrier solvents include alkylbenzenes (for example those sold under the trade name "Solvesso"), cyclohexanone, methylcyclohexanone and either ortho- or para-chlorotoluene. The preferred ratio of pirimicarb to polymer is in the range 1:5 to 5:1 parts by weight, the choice of ratio being dependent upon the choice of solvent system and polymer. The compositions of the invention are typically prepared by admixture of a solution of the polymeric substance in a suitable first carrier solvent with a solution of the active ingredient in a suitable second carrier solvent which may be the same as or different from the first carrier solvent. An emulsifer is added to the mixture which is then further mixed until homogenous. Any of the anionic or non-ionic emulsifiers used in the formulation art may be employed for the compositions according to the invention. Particularly suitable as emulsifiers are nonylphenolethylene oxide condensates. The choice of relative proportions of active ingredient and polymeric substance will be determined by factors commonly understood in the formulation art, and is within the normal skill of the formulator. The solubility of the polymeric material in the carrier solvents and the dilution properties of the solution are key factors in this choice.

Typical slow-release emulsifiable concentrates according to the invention are illustrated in Examples 1 to 4.

EXAMPLE 1

| Ingredient | % by weight |
|---|---|
| Pirimicarb | 14 |
| Non-ionic/anionic emulsifiers | 10 |
| Polystyrene | 10 |
| Cyclohexanone | 40 |
| Alkylbenzene solvent | to 100% |

EXAMPLE 2

| Ingredient | % by weight |
|---|---|
| Pirmicarb | 14 |
| Nonylphenol-ethoxylate | 15 |
| Polystyrene | 5 |
| Cyclohexanone | 40 |
| Alkylbenzene solvent | to 100% |

| EXAMPLE 3 | |
|---|---|
| Ingredient | % by weight |
| Pirmicarb | 14 |
| Polyacrylate (Paraloid B67) | 10 |
| Cyclohexanone | 40 |
| Nonylphenol-ethoxylate | 15 |
| Alkylbenzene solvent | to 100% |

| EXAMPLE 4 | |
|---|---|
| Ingredient | % by weight |
| Pirmicarb | 14 |
| Shellac | 10 |
| Cyclohexanone | 40 |
| Nonylphenol-ethoxylate | 15 |
| Alkylbenzene solvent | to 100% |

Application of pirmicarb in the form of aqueous foliar sprays derived from compositions according to the invention has been shown to lead to increased persistence compared with that obtained with traditional compositions. This is illustrated in Example 5.

EXAMPLE 5

Assessment of Biological Activity and Persistence

In a greenhouse test, chinese cabbage plants were sprayed with diluted compositions according to the invention and with diluted standard compositions, and were then infested with Myzus persicae in order to assess the toxicity of the deposited pirimicarb both initally and after ageing. The results given in Table I demonstrate that the slow-release emusifiable concentrate compositions of Examples 2, 3 and 4 not only give longer persistence and control than the standard composition, but also, unexpectedly, give equivalent initial control.

TABLE I

| COMPOSITION | APPLICATION RATE | % MORTALITY OF M. persicae adults | | | |
|---|---|---|---|---|---|
| | (ppm pirimicarb in spray) | Initial | 1DAT | 2DAT | 3DAT |
| Example 2 | 156 | 96 | 81 | 85 | 49 |
| Example 3 | 156 | 99 | 93 | 90 | 81 |
| Example 4 | 156 | 94 | 97 | 86 | 49 |
| Standard Composition* | 156 | 99 | 96 | 64 | 37 |

* Standard 50% WG formulation sold under the trade name "Aphox"

The compositions described herein for improving the persistence of pirimicarb are also suitable for improving the persistence of other aphicides known in the art, and similarly lead to greater persistence of the aphicide, thereby preventing re-infestation by aphid pests but, surprisingly, with retention of the rapid initial knockdown and control observed with the traditional compositions. Accordingly, in a further aspect, the invention also provides an aphicidal composition suitable use as a concentrate for the preparation of a foliar spray, characterised in that the composition is a slow-release emulsifiable concentrate comprising, as active ingredient, an aphicide selected from the group of aphicides consisting of dimethoate, demeton-S-methyl, heptenophos, 1-(dimethylcarbamoyl)-3-t-butyl-5- carboethoxymethylthio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, a carrier solvent and a polymeric substance which is more soluble in the carrier solvent than in water.

## Claims

1. An aphicidal composition suitable for use as a concentrate for the preparation of a foliar spray, characterised in that the composition is a slow-release emulsifiable concentrate comprising pirimicarb as active ingredient, a carrier solvent and a polymeric substance which is more soluble in the carrier solvent than in water.

2. An aphicidal composition suitable for use as a concentrate for the preparation of a foliar spray, characterised in that the composition is a slow-release emulsifiable concentrate comprising, as active ingredient, an aphicide selected from the group of aphicides consisting of dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, a carrier solvent and a polymeric substance which is more soluble in the carrier solvent than in water.

3. An aphicidal composition as claimed in claim 1 or claim 2 wherein the polymeric substance is is a synthetic polymer selected from polystyrene, polyvinyl chloride, polyacrylate, polyvinyl acetate and copolymers thereof.

4. An aphicidal composition as claimed in claim 1 or claim 2 wherein the polymeric substance is is a natural polymer.

5. An aphicidal composition as claimed in any preceding claim wherein the ratio of the active aphicidal ingredient to the polymeric substance is in the range 1:5 to 5:1 parts by weight.

6. An aphicidal composition as claimed in any preceding claim wherein the solvent is an alkylbenzene, cyclohexanone, methylcyclohexanone, ortho-chlorotoluene or para-chlorotoluene.

7. An aphicidal composition as claimed in any preceding claim containing from 5% to 80% by weight of the active ingredient.

8. A process for the preparation of an aphicidal composition in the form of a slow-release emulsifiable concentrate which comprises admixture of (i) a solution of a polymeric substance in a carrier solvent in which it is more soluble than in water, (ii) a solution of an aphicide selected from the group of aphicides consisting of pirimicarb, dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, in the same or a different carrier solvent and (iii) an emulsifier.

9. A method of preventing or combating an aphid infestation of a plant which comprises application to the foliage of the plant an insecticidally effective amount of an aqueous composition prepared by aqueous dilution of an aphicidal composition as claimed in any one of claims 1 to 7.

European Patent Office

# EUROPEAN SEARCH REPORT

Application Number

EP 89 31 0770

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br><br><br><br>Y | US-A-4 722 838 (S. TOCKER)<br>* Column 2, lines 49-59; column 3, line 19 - column 4, line 35; column 5, lines 29-44; examples 1,5 *<br>--- | 2,3,5-9<br><br><br><br>1 | A 01 N 47/18<br>A 01 N 25/02 |
| D,Y | GB-A-1 181 657 (IMPERIAL CHEMICAL INDUSTRIES)<br>* Page 4, compound no. 4; page 12, lines 114-120; page 13, lines 59-82; examples 23,28 *<br>--- | 1 | |
| X | US-A-3 158 535 (A. BEERBOWER)<br>* Column 1, lines 30-40; column 2, lines 56-70; column 4, lines 19-63; column 4, line 75; column 5, line 5; example 2 *<br>--- | 2,4-9 | |
| A | US-A-4 470 966 (J.R. CONSTANZA)<br>* Column 2, line 20 - column 3, line 14; column 4, lines 42-58; example 3; claims 1-4 *<br>----- | 1-9 | **TECHNICAL FIELDS SEARCHED (Int. Cl.5)**<br>A 01 N |

The present search report has been drawn up for all claims

| Place of search | Date of completion of the search | Examiner |
|---|---|---|
| THE HAGUE | 22-02-1990 | MUELLNERS W. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)